# EUROPÄISCHE PATENTSCHRIFT

(11) **EP 0 838 202 B1**
(45) Veröffentlichungstag und Bekanntmachung des Hinweises auf die Patenterteilung: **02.01.2004**
(21) Anmeldenummer: 97117843.9
(22) Anmeldetag: 15.10.1997
(51) Int. Cl.: A61C 5/10

(54) **Verfahren zur Herstellung von dentalen Objekten, insbesondere von dentalen Gussobjekten**
Method of manufacturing dental objects, in particular by casting
Méthode de fabrication d'objets dentaires, en particulier par moulage

(30) Priorität: 24.10.1996 DE 19644162
(43) Veröffentlichungstag der Anmeldung: 29.04.1998
(73) Patentinhaber: Beimler, Hans-Joachim, Dr., 59065 Hamm (DE); Linden, Norbert, Dr., 40667 Meerbusch (DE)
(72) Erfinder: Beimler, Hans-Joachim, Dr., 59065 Hamm (DE); Linden, Norbert, Dr., 40667 Meerbusch (DE)
(74) Vertreter: Albrecht, Ralf, Dipl.-Ing.

(56) Entgegenhaltungen:
- EP-A- 0 074 527
- EP-A- 0 198 458
- DE-A- 4 012 327
- DE-A- 4 023 088
- US-A- 2 930 124

## Beschreibung

Die Erfindung betrifft ein Verfahren zur Herstellung von dentalen Objekten wie beispielsweise künstlichen Zahnkronen.

Ist das Zahnhartgewebe der natürlichen Krone weitgehend zerstört, kann die mechanische Festigkeit gegen kaufunktionelle Kräfte nur noch durch vollständige Überdeckung durch künstliche Werkstoffe erhalten oder wiedergewonnen werden. Die künstliche Zahnkrone ersetzt dann die organische Schmelzschicht der natürlichen Krone und sollte sich von daher in ihrer äußeren Form nicht von einer natürlichen Krone unterscheiden. Insbesondere muß die Okklusionsfläche, d. h. die Kaufläche, der künstlichen Zahnkrone an die Form der Antagonisten des Gegenkiefers angepaßt werden, und zwar derart, daß ein voller Okklusionskontakt in der Zentrik zur gleichen Zeit wie bei allen anderen Zähnen vorhanden ist.

Bei der Herstellung von künstlichen Zahnkronen wird zunächst der zu überkronende Zahn präpariert, d. h. zu einem Zahnstumpf beschliffen, auf dem dann später die künstliche Zahnkrone fixiert werden kann. In der Regel wird ein leicht konisch oder kegelförmiger Stumpf hergestellt, bei welchem die okklusale Fläche etwas kleiner ist als die marginale, so daß die künstliche Zahnkrone später leicht auf den Zahnstumpf auf geschoben werden kann.

Damit im Laboratorium eine paßgenaue Ersatzkrone hergestellt werden kann, ist es erforderlich, jeden Zahnstumpf mit Hilfe eines speziellen Verfahrens paßgenau abzuformen, wobei in erster Linie ein integrierter Gesamtabdruck von dem jeweiligen Kiefer genommen wird. Alternativ ist es allerdings möglich, das klassische Verfahren ringgestützter Einzelstumpfabformung zu verwenden.

Nach der Abformung des Kiefers wird von dem Gegenkiefer ebenfalls ein Abdruck genommen. Die beiden Kieferabdrücke werden dann mit Gips ausgegossen, und die so hergestellten Ober- und Unterkiefermodelle werden in einem sogenannten Artikulator, d. h. einem Kausimulator, montiert. Dann wird an dem Modell des abgeformten Zahnstumpfes eine Gußschablone des herzustellenden dentalen Gußobjekts modelliert, wobei in dem Artikulator zur Überprüfung der Gußschablone artikulierende Kaubewegungen, die dem individuellen Pfeilwinkelregistrat des Patienten entsprechen, simuliert werden. Dieser Vorgang wird auch gnathologisches Aufwachsen genannt.

Die fertiggestellte Gußschablone der herzustellenden Zahnkrone wird dann von dem entsprechenden Kiefermodell abgenommen und in eine spezielle beheizbare Gußform, Muffel genannt, eingebracht, wo sie unter Belassung eines von der Gußschablone nach außen führenden Einfüllkanals für das Gußmaterial, aus dem die Zahnkrone bestehen soll, ringsum in eine Einbettmasse eingebettet wird.

Die Muffel wird anschließend auf eine Temperatur von etwa 525 bis 750°C erwärmt, wodurch die Einbettmasse aushärtet und gleichzeitig das Material der Gußschablone schmilzt und durch den Einfüllkanal aus der Muffel tropft.

Wenn das Material der Gußschablone vollständig aus der Muffel entfernt ist, wird das Gußmaterial, beispielsweise Metall oder Keramik, in die Muffel eingebracht. Um dabei eine Lunkerbildung zu vermeiden, wird hierzu in der Regel eine Zentrifugalschleuder verwendet, die das Gußmaterial unter Druck in die Muffel einpreßt.
Die Gußform wird abgekühlt, wobei sich der Gußkörper verfestigt. Anschließend wird die Einbettmasse entfernt und das Gußobjekt von Gußkegel, Gußstiften und Gußperlen befreit, aufgearbeitet und blankpoliert.

Die so fertiggestellte künstliche Zahnkrone wird in den Mund des Patienten eingesetzt und auf dem entsprechenden Zahnstumpf festzementiert.

Das bekannte Verfahren ist sehr aufwendig und ist auch fehlerbehaftet, da eine 100 %ig genaue Abdrucknahme von Kiefer und Gegenkiefer nicht möglich ist. Außerdem kann im Artikulator die Kaubewegung des jeweiligen Patienten auch nur näherungsweise simuliert werden, weshalb die fertigen dentalen Gußobjekte oftmals nicht ausreichend paßgenau sind und aufwendig nachbearbeitet oder auch völlig neu gemacht werden müssen.

Aus der DE 40 23 088 A1 ist ein Verfahren zum Herstellen von zweiteiligen Kronen bekannt. Bei diesem Verfahren wird eine vorgefertigte Innenkappe auf einen vorbereiteten Zahnstumpf, auf welchen eine plastische Formmasse wie Wachs aufgeformt ist, aufgesetzt. Nach Erhärten der plastischen Formmasse wird die Kappe zusammen mit dieser vom Zahnstumpf abgezogen. Im Zahnlabor wird dann auf der Basis dieser Einheit aus Kappe und Formmasse eine Gießform erstellt, welche eine definierte Außenform besitzt und eine Innenform hat, die an den Zahnstumpf angepaßt ist.

In ähnlicher Weise wird eine Außenkrone in einem Gießvefahren hergestellt, wobei zur Herstellung des Modells für diese Außenkrone eine fertige Außenkappe, deren Innenkontur der Außenkontur der Innenkappe entspricht, auf die Innenkappe aufgesetzt wird, eine plastische Formmasse wie Wachs auf die Außenkappe gebracht wird und nach der Modellierung der Formmasse diese zusammen mit der Außenkappe abgenommen wird.

Aufgabe der Erfindung ist es, ein Verfahren anzugeben, mit dem dentale Objekte wie beispielsweise künstliche Zahnkronen mit hoher Genauigkeit und auf einfache Weise hergestellt werden können. Diese Aufgabe ist erfindungsgemäß durch die Verfahren nach den Ansprüchen 1 und 5 gelöst. Dadurch, daß die Modellierung der Gußschablone direkt im Mund des Patienten erfolgt, ist es nicht mehr erforderlich, Kiefer und Gegenkiefer abzuformen, wodurch eine wesentliche Fehlerquelle entfällt und auch das Verfahren deutlich vereinfacht wird. Außerdem ist die Überprüfbarkeit der hergestellten Gußschablone sehr hoch, da die artikulierenden Kieferbewegungen selbst als Prüfkriterium herangezogen werden und nicht wie bisher in einem Artikulator simuliert werden.

Durch die Verwendung eines Kunststoffes, der bereits im Mund des Patienten eine hohe Festigkeit annimmt, wird dabei verhindert, daß sich die hergestellte Gußschablone beim "Zähneknirschen" und insbesondere auch bei der Entnahme aus dem Mund des Patienten verformt, wodurch eine hohe Paßgenauigkeit der fertigen künstlichen Zahnkrone erreicht wird.

Es hat sich gezeigt, daß als Material für die Gußschablone ein Kunststoff auf der Basis von Methacrylsäuremethylester besonders geeignet ist.

Um die Modellierung im Mund des Patienten und damit die Behandlungszeit zu verkürzen, kann zur Herstellung der Gußschablone ein Modellkörper verwendet werden, der nach dem individuellen Pfeilwinkelregistrat des Patienten vorgeformte Kauflächen aufweist. In diesem Fall entfällt die Großbearbeitung, und es fällt nur die Feinmodellierung der Gußschablone an.

Es ist auch möglich, nach Abformung Gipsmodelle von Kiefer und Gegenkiefer herzustellen, um die im Mund hergestellte Gußschablone insbesondere unter Verwendung eines Artikulators nochmals zu überprüfen.

Das Verfahren ist auf alle dental-rekonstruktiven Maßnahmen anwendbar.

Obwohl das dentale Objekt vorzugsweise gegossen wird, stellt das Gießen kein unbedingt notwendiges Merkmal dar. In alternativer Weise ist es auch möglich, das Modell in der zuvor beschriebenen Weise im Mund des Patienten aus einem Kunststoff, der im Mund des Patienten die zuvor genannte Festigkeit annimmt, und aufgrund des Modells das fertige Objekt durch ein Kopierfräsverfahren herzustellen. Die Nachbearbeitung kann dann in gleicher Weise erfolgen wie bei dem Gußobjekt.

## Patentansprüche

1. Verfahren zur Herstellung von dentalen Objekten wie beispielsweise künstlichen Zahnkronen, das die folgenden Schritte aufweist:
a) eine Schablone des herzustellenden Objektes wird direkt im Mund des Patienten unter gnathologischen Gesichtspunkten, die durch die artikulierenden Kieferbewegungen des Patienten festgelegt und überprüft werden, modelliert,
b) als Material für die Schablone wird ein härtbarer Kunststoff verwendet, der eine so hohe Festigkeit im Mund des Patienten annimmt, daß die Schablone bei ihrer Bearbeitung und Entnahme aus dem Mund des Patienten im wesentlichen nicht verformt wird, und der bei der Erhitzung der Gußform rückstandsfrei verbrennt, und
c) auf der Grundlage der Schablone wird das Objekt durch Gießen hergestellt, wobei
die fertiggestellte Schablone in eine Gußform, insbesondere eine Muffel, eingebracht und dort allseitig in eine Einbettmasse unter Bildung eines von der Schablone nach außen führenden Einfüllkanals für Gußmaterial eingebettet wird,
das Material der Schablone unter Erhitzung der Gußform aus der Gußform entfernt wird,
die Gußform mit Gußmaterial gefüllt und unter Verfestigung des Gußmaterials abgekühlt wird und
das abgekühlte Objekt aus der Gußform entfernt, von Gußkegel, Gußstiften und Gußdefekten befreit, aufbereitet und poliert wird.

2. Verfahren nach Anspruch 1,
**dadurch gekennzeichnet, daß** als Material für das Positivmodell ein Kunststoff auf der Basis von Metacrylsäuremethylester verwendet wird.

3. Verfahren nach Anspruch 1 oder 2,
**dadurch gekennzeichnet, daß** zur Herstellung der Schablone ein Schablonenkörper verwendet wird, der nach dem individuellen Pfeilwinkelregistrat des Patienten vorgeformte Kauflächen aufweist.

4. Verfahren nach einem der Ansprüche 1 bis 3,
**dadurch gekennzeichnet, daß** nach Abformung Gipsmodelle von Kiefer und Gegenkiefer hergestellt werden, an denen die im Mund hergestellte Schablone insbesondere unter Verwendung eines Artikulators überprüft wird.

5. Verfahren zur Herstellung von dentalen Objekten wie beispielsweise künstlichen Zahnkronen, das die folgenden Schritte aufweist:
a) eine Schablone des herzustellenden Objektes wird direkt im Mund des Patienten unter gnathologischen Gesichtspunkten, die durch die artikulierenden Kieferbewegungen des Patienten festgelegt und überprüft werden, modelliert,
b) als Material für die Schablone wird ein härtbarer Kunststoff verwendet, der eine so hohe Festigkeit im Mund des Patienten annimmt, daß die Schablone bei ihrer Bearbeitung und Entnahme aus dem Mund des Patienten im wesentlichen nicht verformt wird, und
c) auf der Grundlage der Schablone wird das Objekt mittels eines Kopierfräsverfahrens aus einem definitiven Restaurationsmaterial hergestellt.

## Claims

1. Process for manufacturing dental objects such as, for example, artificial dental crowns, having the following stages:
a) a model form of the object to be produced is fashioned directly in the patient's mouth under gnathological viewing points that are determined and checked by means of movement of the patient's jaw,
b) a hardenable synthetic material is used for the model form, that takes on a level of solidity in the patient's mouth whereby the mould is essentially not deformed when it is worked on and removed from the patient's mouth, and bums without residue when the mould is heated or ignited,
c) the object is produced, on the basis of the model form, by casting, the finished mould is introduced into a die, particularly a retort and is embedded on all sides, with the formation of a filling channel, leading outwards from the model form, for casting material,
the material of the model form is removed from the casting by heating the casting,
the material of the model form is filled with casting material and is cooled with hardening of the casting material and
the cooled object is removed from the mould, is freed of casting plugs, studs and defects, is prepared and polished.

2. Process in accordance with claim 1,
**characterized in that**
a synthetic material based on metacrylic acid methyl ester is used as the material for the positive mould.

3. Process in accordance with claim 1 or 2,
**characterized in that** a form body is used, for producing the model form, that has preformed chew surfaces in accordance with the individual backward angle index.

4. Process in accordance with one of claims I to 3,
**characterized in that**, following forming, plaster-of Paris models of the jaw and lower jaw are produced on which the model forms produced in the mouth are checked using, in particular, an articulator.

5. Process for producing dental objects such as, for example, synthetic crowns, that has the following stages:
a) a model form of the object to be produced is fashioned directly in the patient's mouth under gnathological viewing points that are determined and checked by means of movement of the patient's jaw,
b) a hardenable synthetic material is used for the model form, that takes on a level of solidity in the patient's mouth whereby the mould is essentially not deformed when it is worked on and removed from the patient's mouth, and
c) the dental object is produced, from a specific restoration material, on the basis of the model form, by means of a copying process.

## Revendications

1. Procédé pour fabriquer des objets dentaires, comme par exemple, des couronnes dentaires artificielles , lequel procédé comporte les étapes suivantes :
a) un modèle de l'objet à fabriquer est modelé directement dans la bouche du patient en tenant compte des aspects gnathologiques qui sont fixés et vérifiés par les mouvements articulés de la mâchoire du patient,
b) pour le modèle, on utilise une matière plastique durcissable qui présente une résistance si élevée dans la bouche du patient que ledit modèle n'est pratiquement pas déformée pendant le traitement et lorsqu'on la retire de la bouche du patient et qui brûle sans laissant des résidus lorsque le moule est chauffé et
c) conformément au modèle , l'objet est fabriqué par coulage, où
l'empreinte fabriquée est transférée dans un moule , notamment un moufle et lequel empreinte est noyé à cet endroit dans une masse de moulage en formant un canal de remplissage pour le matériau de coulage , s'étendant à partir de l'empreinte vers l'extérieur,
le matériau du modèle est retiré du moule en chauffant le moule ,
le moule est rempli de matériau de moulage et est refroidi lorsque le matériau de moulage durcit et
l'objet refroidit sorti du moule est débarrassé du cône de coulée, des tiges de coulée et des défauts de coulée, préparé et poli.

2. Procédé selon la revendication 1, **caractérisé en ce qu'**on utilise une matière plastique sur la base de méthyle ester d'acide méthacrylique comme matériau pour le modèle positif.

3. Procédé selon la revendication 1 ou 2, caractérisé en qu'on utilise un corps de modèle pour fabriquer le modèle, lequel corps de modèle présente des surfaces de masticage préformées selon le registre des angles de flèche individuel de chaque patient.

4. Procédé selon une des revendications 1 à 3, **caractérisé en ce qu'**on fabrique des modèles de mâchoires et contre-mâchoires en plâtre après moulage sur lesquels le modèle fabriqué dans la bouche peut être vérifié, notamment en utilisant un articulateur.

5. Procédé pour fabriquer des objets dentaires, comme par exemple, des couronnes dentaires artificielles qui comporte les étapes suivantes :
a) un modèle de l'objet à fabriquer est modelé directement dans la bouche du patient en tenant compte des aspects gnathologiques qui sont fixés et vérifiés par les mouvements articulés de la mâchoire du patient;
b) Pour le modèle , on utilise une matière plastique durcissable qui présente une résistance si élevée dans la bouche du patient que ledit modèle n'est pratiquement pas déformée pendant le traitement et lorsqu'on la retire de la bouche du patient et
c) conformément au modèle , l'objet est fabriqué au moyen d'un procédé de copier - fraiser dans un matériau de restauration définitif .
